# EUROPÄISCHE PATENTSCHRIFT

(11) **EP 0 960 285 B1**
(45) Veröffentlichungstag und Bekanntmachung des Hinweises auf die Patenterteilung: **25.04.2001**
(21) Anmeldenummer: 98910623.2
(22) Anmeldetag: 12.02.1998
(51) Int. Cl.: F16C 13/00

(54) **WALZVORRICHTUNG FÜR DIE DRUCKBEHANDLUNG VON WARENBAHNEN**
CYLINDER DEVICE FOR PRESSURE PROCESSING OF STRIPS
DISPOSITIF A CYLINDRES POUR LE TRAITEMENT PAR COMPRESSION D'ARTICLES EN BANDES

(30) Priorität: 14.02.1997 DE 19705638
(43) Veröffentlichungstag der Anmeldung: 01.12.1999
(73) Patentinhaber: Eduard Küsters Maschinenfabrik GmbH & Co. KG, 47805 Krefeld (DE)
(72) Erfinder: KÜSTERS, Karl-Heinz, D-47804 Krefeld (DE)
(74) Vertreter: Palgen, Peter, Dipl.-Phys. Dr.
(86) Internationale Anmeldenummer: DE9800400
(87) Internationale Veröffentlichungsnummer: WO9836183

(56) Entgegenhaltungen:
- DE-U- 8 608 228
- US-A- 1 978 218
- US-A- 4 856 154
- US-A- 5 061 087
- US-A- 5 382 096

## Beschreibung

Die Erfindung bezieht sich auf eine Walzvorrichtung der dem Oberbegriff des Anspruchs 1 entsprechenden Art.

Eine derartige Walzvorrichtung ist aus der US-A-4 856 154 bekannt. Die innere Stützeinrichtung besteht hierbei aus einer Reihe von längs des Walzspaltes aufgereihten, an dem Querhaupt angebrachten Stützstempeln mit hydrostatischen Lagertaschen, die auf der Seite des Walzspaltes gegen den Innenumfang der Hohlwalze wirken und dort die zur Bildung der Linienkraft erforderlichen Einzelkräfte aufbringen. Unter den Gegenkräften der Stützstempel biegt sich das Querhaupt innerhalb der Hohlwalze durch, ohne deren Innenumfang zu berühren. Dazu beläßt das Querhaupt rundum Abstand zu diesem Innenumfang. Die Ausrichtung der Hohlwalze wird von der Linienkraft im Walzspalt nicht oder nur wenig beeinflußt. Die zur Aufbringung der Gegenkräfte zur Linienkraft längs des Walzspalts erforderliche Verformung wird von dem an den Enden abgestützten, sich durchbiegenden Querhaupt übernommen, welches durch die Linienkraft eine Streckenlast erfährt.

Von der Art der Stützeinrichtung ist die Erfindung unabhängig. Bei der Walzvorrichtung der US-A-4 856 154 besteht die Stützeinrichtung aus den erwähnten Stützstempeln. Es kann sich aber auch um eine mit Druckflüssigkeit gefüllte halbzylinderschalenförmige Längskammer handeln, wie sie in der DE-PS 10 26 609 dargestellt ist. Auch magnetische oder mechanische Stützeinrichtungen sind nicht ausgeschlossen.

In allen Fällen kommt es zu der beschriebenen Durchbiegung des Querhauptes, die zu einer entsprechenden
Schrägstellung der aus der Hohlwalze hervorstehenden Enden des Querhauptes führt. Diese Enden sind bei der bekannten Ausführungsform in statischen äußeren Lagerungen abgestützt, die im allgemeinen in seitlichen Wangen eines Walzenständers oder in Kalanderschwingen angeordnet sind und zur Vermeidung von Zwängungen zusammenwirkende Kugelschalen aufweisen, die die Durchbiegung des Querhauptes erlauben und die Kräfte der Walze in den Maschinenständer übertragen.

Die auf das einzelne Kugelschalenpaar an einem Ende des Querhauptes entfallende Belastung kann durchaus in der Größenordnung von 100 t liegen. Bei sich ändernder Durchbiegung des Querhauptes erfolgt die Veränderung der Lage der Kugelschalen gegeneinander unter dieser hohen Last und unter entsprechender Reibung, wodurch auch erhebliche Kippkräfte von der Lagerung auf den Maschinenständer übertragen werden. Es ist dabei von großer Bedeutung, daß es sich um eine statische Lagerung handelt, bei der sich die Lagerpartner im Betrieb nicht gegeneinander drehen, sondern bei Änderungen der Durchbiegung lediglich in der Wirkebene gegeneinander ein wenig verlagern. Wegen des hierbei zu überwindenden Losbrechmomentes ist das
Reibungsproblem besonders groß.

In der US-A-4 856 154 ist auch auf die Platzbeschränkung hingewiesen, der die in Rede stehenden Walzen unterliegen: die Lagerung an den Enden des Querhauptes darf nicht radial über dem Durchmesser der Hohlwalze ausladen, weil sie sonst mit der Lagerung der benachbarten Walzen in Konflikt gerät. Es kommt also bei jeglicher Ausführung einer solchen Walze auf eine radial möglichst kompakte Bauweise an.

Bei der Ausführungsform nach der DE-AS 22 54 392, die ansonsten der US-A-4 856 154 ähnlich ist, beschränkt sich die Reibung auf die Kugelschalen, weil nur dort eine Bewegung auftritt. Diese Ausführungsform hat nämlich einen sogenannten inneren Hub, d.h. die Hohlwalze kann sich als Ganzes in Querrichtung relativ zum Querhaupt bewegen. Die Anstellbewegung der Walze wird hierbei von der inneren Stützeinrichtung, d.h. innerhalb der Walze selbst herbeigeführt. Die Lager an den Enden des Querhauptes müssen nur die biegungsbedingten Winkeländerungen aufnehmen können, brauchen aber bei der Anstellbewegung nicht als Ganze in der Wirkebene verlagert zu werden.

Es gibt aber auch sogenannte lagerzentrierte Walzen, die an den Enden der Hohlwalze Drehlager aufweisen, mittels derer sich die Hohlwalze auf dem Querhaupt abstützt. Hierbei kann sich die Hohlwalze nicht quer zum Querhaupt verlagern und kann daher die Anstellbewegung nicht innerhalb der Walzen selbst bewerkstelligt werden, sondern muß die Walze als Ganzes mitsamt ihrem Querhaupt verlagert werden. Bei diesen Walzen wird die Anstellbewegung durch auf die Enden des Querhauptes wirkende Kolben/Zylindereinheiten herbeigeführt, die sich am Walzenständer abstützen und an den Enden des Querhauptes angreifen. Die Enden des Querhauptes sind in parallel zur Wirkebene der Walze gerichteten Führungen am oder im Walzenständer geführt. Die hohe Reibung an den auch hier vorhandenen Kugelschalenflächen führt zu Kräften auf die Führungen und dort auftretenden Reibungskräften, die die genaue Steuerung der Linienkraft im Walzspalt stören.

Die Kugelflächen in den Lagerungen des Querhauptes dienen zur Aufnahme der bei der Durchbiegung des Querhauptes auftretenden Fluchtfehler der Enden des Querhauptes. Das Querhaupt, das bis zu zehn Meter lang sein kann, erfährt jedoch besonders bei temperierten Walzen auch thermisch bedingte Längenänderungen, die zu Verschiebungen des Querhauptes in seiner Längsrichtung gegenüber den von den thermischen Ausdehnungen nicht betroffenen Seitenwangen des Walzenständers führen. Besonders bei beheizten Walzen, bei denen im stationären Zustand auch das Querhaupt eine erhöhte Temperatur annimmt, können die Verlagerungen an den Walzenenden durchaus beachtlich sein. 100° Temperaturdifferenz führen bei 10m Länge zu einer Verlagerung von mehr als einem Zentimeter, die von den äußeren Lagerungen bewältigt werden müssen, wobei auch insoweit Reibung unter voller Last auftritt.

Der Erfindung liegt die Aufgabe zugrunde, bei einer gattungsgemäßen Walze unter Wahrung der gebotenen radial kompakten Bauweise die mit der hohen Reibung an den äußeren Lagerungen einhergehenden Probleme zu beheben.

Diese Aufgabe wird durch die in Anspruch 1 wiedergegebene Erfindung gelöst.

Durch den Absatz des Querhauptes kann die platzsparende Anordnung der Teile gefördert und Platz für die Unterbringung der Kraft übertragenden Bauteile geschaffen werden.

Zum Ausgleich der thermischen Längenänderungen sind die ebenen Gleitflächen vorgesehen, die diese Längenverlagerungen aufnehmen. Die ebenen Gleitflächen sind gemäß der Erfindung ebenso wie die Kugelflächen zumindest teilweise hydraulisch entlastet.

Die "zumindest teilweise hydraulische Entlastung" der äußeren Lagerungen soll bedeuten, daß zumindest der überwiegende Teil der auf die Lagerflächen wirkenden Kräfte durch eine hydraulische Flüssigkeit hindurch übertragen wird, so daß bei einer gegenseitigen Verschiebung zusammenwirkender Flächen ein großer Teil der Kräfte über die Flüssigkeit, also praktisch reibungsfrei, fortgeleitet wird, so daß in diesem Umfang die sonst an den Lagerflächen auftretende Reibung und die dadurch erzeugten Momente auf die Führungselemente entfallen.

Die Teile der Lagerung sind zu einer Baueinheit zusammengefaßt, die in einer Öffnung des Widerlagers, d.h. der Wangen des Walzenständers angeordnet werden kann. Es ermöglicht dies eine besonders platzsparende Ausführung, weil keine außerhalb der Lagerung vorhandenen Teile wie hydrostatische Zylinder oder dergleichen vorgesehen sein müssen, um die Anstellbewegung einer solchen Walze, auch wenn sie keinen inneren Hub hat, herbeizuführen. Die Kraftaufbringung und die Anstellbewegung können von den innerhalb des Lagergliedes zusammengefaßten Elementen bewerkstelligt werden.

Die hydrostatische Abstützung zur Vermeidung von Reibung am Querhaupt von durchbiegungssteuerbaren Walzen ist für sich genommen aus der DE 40 11 364 C2 bekannt. Dieser liegt eine Walze mit innerem Hub zugrunde, bei dem das Querhaupt parallel zur Wirkebene gelegene Gleitflächen aufweist, an denen ein Führungsring parallel zur Wirkebene verlagerbar geführt ist, der über ein Drehlager der Hohlwalze abgestützt ist. Zur Vermeidung von störender Reibung bei der Verlagerung des Führungsrings an den ebenen Gleitflächen des Querhauptes sind hydrostatische Lagertaschen vorgesehen. Hierbei handelt es sich aber um Geradführungen innerhalb der Hohlwalze, nicht um die Lagerung des Querhauptes derselben.

Bei der Abstützung eines Walzenzapfens über Kugelflächen ist die hydraulische Entlastung derselben für sich genommen aus der US-A-5 382 096 bekannt, und zwar auch schon für eine Kombination von Kugelflächen und ebenen Gleitflächen. Allerdings handelt es sich um die Drehlagerung eines Walzenzapfens, nicht um eine statische Lagerung wie bei der Erfindung.

Der Gedanke der Erfindung läßt sich auf zwei Weisen verwirklichen, die konstruktiv verschieden sind.

Die erste dieser Ausführungsformen ist Gegenstand des Anspruchs 2.

Hierbei sind die beiden Teile der Kolbenzylindereinheit aneinander linear geführt und können sich nicht gegeneinander neigen. Die Nachgiebigkeit gegenüber den Schrägstellungen bei Durchbiegungen des Querhauptes liegt hierbei in der Abstützung des ersten Teils der Kolbenzylindereinheit an dem Querhaupt.

Die alternative Ausführungsform ist Gegenstand des Anspruchs 3.

Hierbei liegt die Nachgiebigkeit innerhalb der Kolbenzylindereinheit, deren Teile gegeneinander durch Belassung entsprechenden Spiels zwischen ihnen und dieses Spiel zu überbrücken geeignete Dichtungen gegeneinander neigbar sind.

Zur Vermeidung von Kippmomenten empfiehlt es sich nach Anspruch 4, daß die Kugelflächen und die ebenen Gleitflächen ringförmig und zu der Achse der Kolbenzylindereinheit gleichachsig ausgebildet sind.

Der konstruktive Aufbau kann bei der Ausführungsform mit Kugelflächen im einzelnen gemäß Anspruch 5 getroffen sein.

Eine zweckmäßige bauliche Ausführung der Kolben/Zylindereinheit ist Gegenstand des Anspruchs 6.

Eine wichtige konkrete Ausgestaltung der beschriebenen Anordnung ist Gegenstand des Anspruchs 7.

Die Druckentlastungskammer wird durch den Boden der Kolben/Zylindereinheit und den Boden des Schalenbauteils jeweils in Achsrichtung und durch die Ringdichtungen in radialer Richtung begrenzt. Das Kalottenbauteil steht auf beiden Seiten unter dem Druck der Hydraulikflüssigkeit und ist im Rahmen der Übereinstimmung der Wirkflächen hydraulisch entlastet, d.h. kräftefrei. Der Druck der Hydraulikflüssigkeit tendiert dazu, den Boden der Kolbenzylindereinheit von dem Schalenbauteil abzuheben. Die Teile liegen ohne Druck in der Druckentlastungskammer über die radial außerhalb derselben vorgesehenen ebenen Gleitflächen und die Kugelflächen aufeinander an. Beide Flächenpaare werden durch einen Druck in der Druckentlastungskammer hydraulisch entlastet, d.h. die Kraft der Kolbenzylindereinheit wird über die hydraulische Flüssigkeit fortgeleitet.

Wenn die Ringdichtungen gemäß Anspruch 8 etwa gleichen Durchmesser aufweisen, kann das Kalottenbauteil im wesentlichen auch nicht vollständig kräftefrei gehalten werden.

Es ist vorteilhaft, radial außerhalb der Ringdichtungen Leckölsammeltaschen auszubilden (Anspruch 9), die das an den Ringdichtungen aus der Druckentlastungskammer radial nach außen austretende Lecköl aufnehmen und die gemäß Anspruch 10 angeordnet sein können.

Eine konstruktiv zweckmäßige Ausbildung besteht darin, die Ringdichtungen der Druckentlastungskammer zugleich als eine Begrenzung der Leckölsammeltaschen zu nehmen und die andere Begrenzung durch zusätzliche konzentrisch dazu verlaufende Ringdichtungen zu schaffen (Anspruch 11).

Die Flüssigkeitsableitung aus den Leckölsammeltaschen kann gemäß Anspruch 12 durch Bohrungen geschehen, die in eine Leckölsammelkammer münden, die mit einer Absaugeinrichtung verbunden ist. Die Anordnung hat den zusätzlichen Vorteil, daß auch das Lecköl der unter hohem Druck stehenden Kolben/Zylindereinheit in die Leckölsammelkammer eintreten und zusammen mit dem anderen Lecköl abgeführt werden kann.

Damit eine Anfangsdichtigkeit vorhanden ist, empfiehlt sich eine Andrückung der Teile der Druckentlastungskammer unter Federkraft (Anspruch 13).

Die Kolbenzylindereinheit kann der bei der Ausführungsform, bei der die Nachgiebigkeit bei Durchbiegungen des Querhauptes in der Kolbenzylindereinheit selbst gelegen ist, gemäß Anspruch 14 ausgebildet sein, wobei die Druckentlastungskammer hierbei gemäß Anspruch 15 gestaltet sein kann.

Der Druck in der Druckentlastungskammer wird bei beiden Ausführungsformen gemäß Anspruch 16 zweckmäßig von dem Druck im Druckraum über eine durch eine Drosselbohrung hergestellte Flüssigkeitsverbindung abgeleitet. Dies hat auch den Vorteil, daß der Entlastungsdruck selbsttätig dem Belastungsdruck folgt.

In der Zeichnung sind zwei Ausführungsbeispiele der Erfindung dargestellt.

Fig. 1 zeigt eine vereinfachte Ansicht des einen Walzenpaars eines Doppelkalanders;
Fig. 2 zeigt eine Teilansicht einer ersten Ausführungsform der Lagerung, teilweise in einem durch die Achse des Querhauptes gehenden Schnitts;
Fig. 3 zeigt einen senkrecht zur Achse des Querhauptes gelegten Schnitt durch die Lagerung eines Endes des Querhauptes gemäß der Linie III-III in Fig. 1;
Fig. 4. zeigt einen Fig. 3 entsprechenden Schnitt nach der Linie IV-IV in Fig. 5 einer zweiten Ausführungsform der Lagerung an dem anderen Ende des Querhauptes;
Fig. 5 zeigt eine Teilansicht dieser Ausführungsform entsprechend Fig. 2.

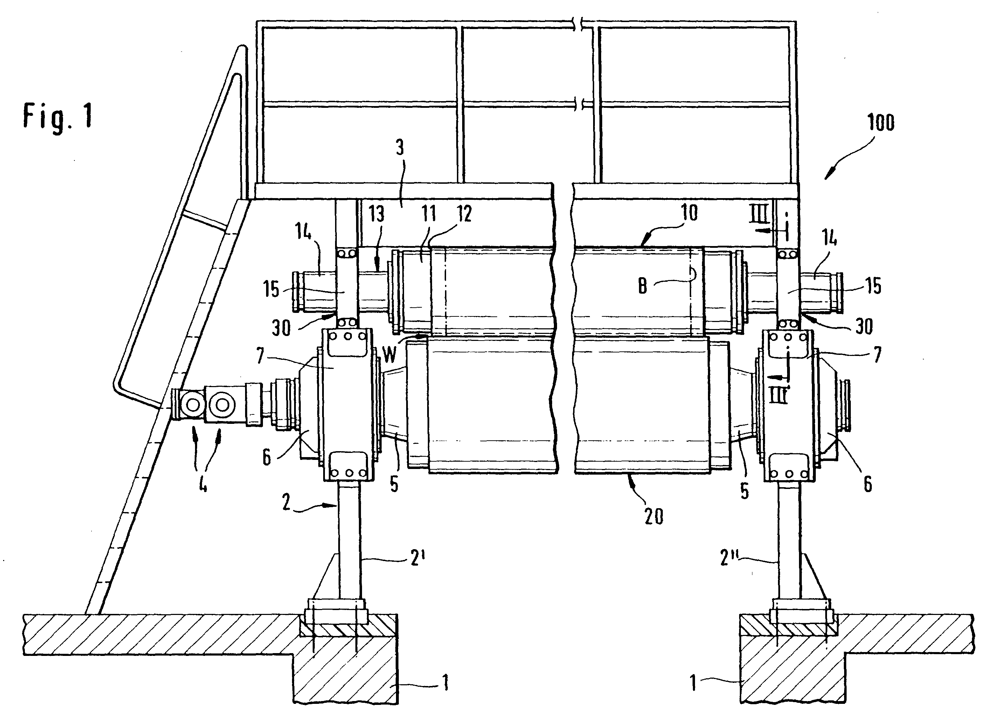

In Fig. 1 ist das eine Walzenpaar 10, 20 eines Doppelkalanders 100 zum Satinieren einer Papierbahn B dargestellt. Der Doppelkalander 100 umfaßt noch ein weiteres derartiges Walzenpaar in umgekehrter Anordnung, welches den gezeigten Walzen 10, 20 in Laufrichtung unmittelbar vor- oder nachgeschaltet ist. Der Doppelkalander 100 ist auf einem Fundament 1 angebracht und umfaßt einen Walzenständer 2 mit zwei seitlichen Wangen 2' und 2'', die oberhalb der Walzen 10, 20 durch einen Querträger 3 zu einer portalartigen Konstruktion verbunden sind.

Zwischen den seitlichen Wangen 2', 2'' erstrecken sich die Walzen 10, 20. Die Walze 20 hat einen glatten Stahlmantel und ist beheizt. Die Anschlüsse für eine in peripheren Bohrungen durch die Walze 20 geleitete Wärmeträgerflüssigkeit sind bei 4 angedeutet. Die Zapfen 5 der Walze 20 sind in Lagern 6 gelagert, die in in entsprechenden mit den Wangen 2', 2'' verbundenen Lagerkörpern 7 vorgesehen sind.

Die Walze 10 ist als durchbiegungssteuerbare Walze ausgebildet, die eine Hohlwalze 11 mit einem Kunststoffbelag 12 umfaßt. Die Hohlwalze 11 ist der Länge nach von einem Querhaupt 13 durchgriffen, welches im Inneren der Hohlwalze 11 ringsum Abstand zu deren Innenumfang beläßt und mit seinen Enden 14 aus der Hohlwalze axial hervorsteht. Das Querhaupt 13 ist undrehbar und an den Enden in pendelfähigen äußeren Lagerungen 30 gelagert, die wie die Lager 6 in Lagerkörpern 15 untergebracht sind, die mit den Wangen 2', 2'' verbunden sind.

An dem Querhaupt 13 ist im Inneren der Hohlwalze 11 eine gegen deren Innenumfang wirkende Stützeinrichtung z.B. hydraulischer Art angeordnet, die Kraft auf den Innenumfang der Hohlwalze 11 gemäß Fig. 1 nach unten, d.h. gegen die Walze 20 hin ausübt. Unter der Wirkung der Linienkraft in dem Walzspalt W biegt sich das Querhaupt 13 durch und kann die Hohlwalze unabhängig davon in ihrer Biegelinie der Biegelinie der Walze 20 folgen. Die durch die Durchbiegung entstehende Schrägstellung der Enden 14 des Querhauptes 13 wird durch die pendelfähigen Lagerungen 30 aufgefangen, ohne daß es zu Zwängungen an den Wangen 2', 2'' kommt.

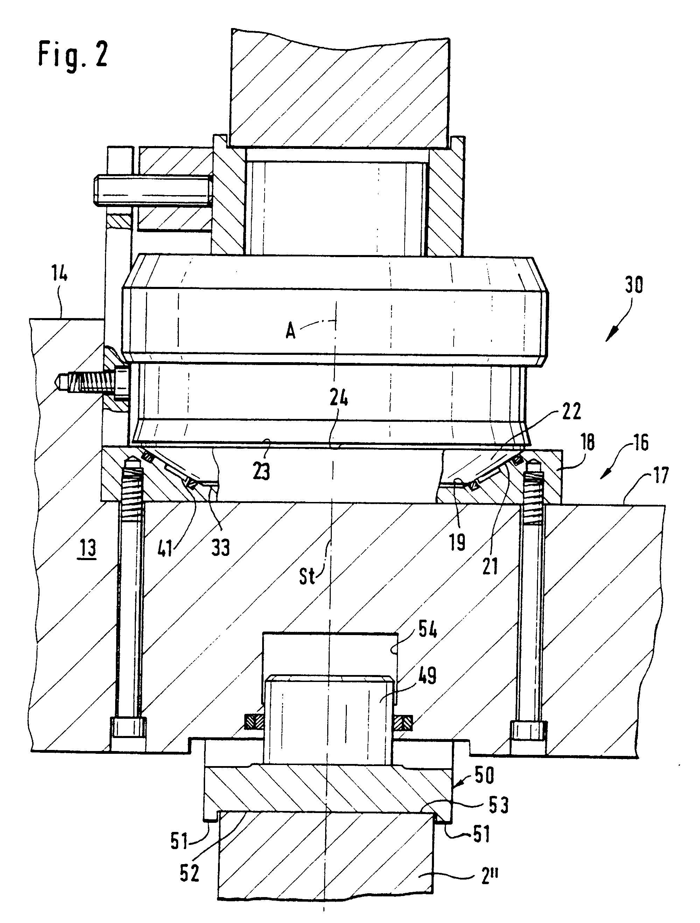

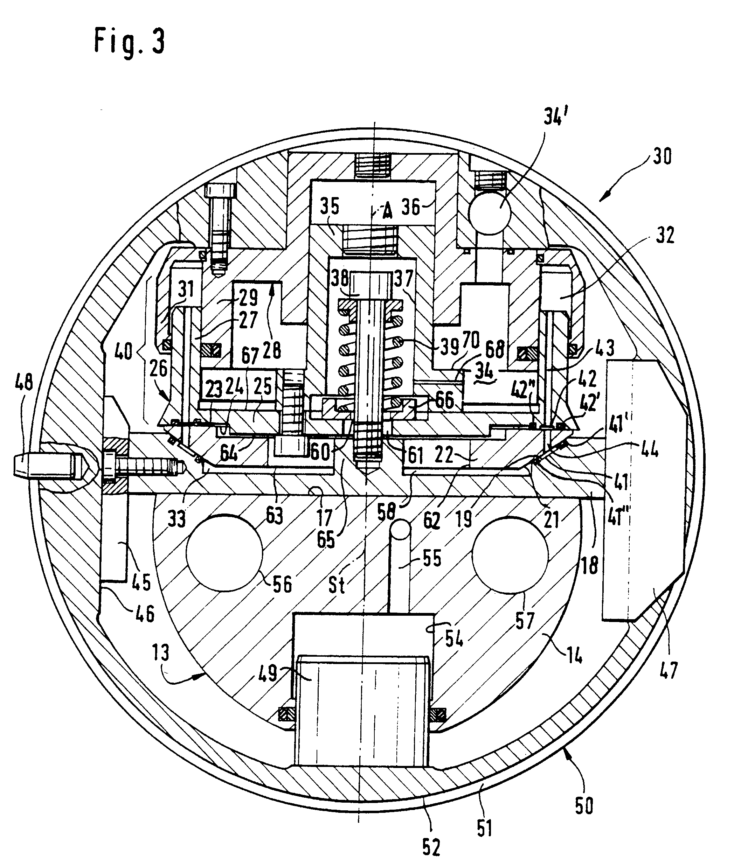

Die Ausbildung einer ersten Ausführungsform einer solchen Lagerung 30 ist aus den Fig. 2 und 3 im einzelnen ersichtlich.

In Fig. 2 ist das rechte Ende 14 des Querhaupts 13 (Fig. 1) wiedergegeben. Das Ende 14 besitzt einen Absatz 16 mit einer ebenen oberen zur Achse des Querhauptes 13 parallelen horizontalen Stützfläche 17. Das Ende 14 ist um etwa zwei Fünftel des Durchmessers abgesetzt. Auf der abgesetzten Stützfläche 17 ist ein im Ganzen scheibenförmiges Schalenbauteil 18 mit einer ringförmigen, zur Ringachse koaxialen konkaven Kugelfläche 19 angebracht, deren Achse A vertikal und bei unbelastetem Querhaupt 13 in der Stützebene St angeordnet ist, die in der Mitte der Wangen 2', 2'' gelegen ist. Das Schalenbauteil 18 bildet eine flache, von der Kugelfläche 19 berandete Vertiefung 33. Auf der Kugelfläche 19 liegt ein ringscheibenförmiges, eine zentrale durchgehende Öffnung 62 aufweisendes Kalottenbauteil 22 mit einer konvexen, der Kugelfläche 19 gleichen Kugelfläche 21 an. Die Kugelflächen 19, 21 verschwenken gegeneinander um den Kugelmittelpunkt, wenn sich das Querhaupt 13 unter der Streckenlast im Walzspalt W, die durch die Stützeinrichtung als Querkraft auf das Querhaupt 13 übertragen wird, gemäß Fig. 2 in der Zeichenebene durchbiegt und das Ende 14 des Querhauptes 13 von links oben nach rechts unten schrägstellt. Die Schrägstellung kann durchaus merklich sein. Bei großen Walzen kann sich das Querhaupt unter voller Belastung in der Mitte 30 mm aus der gestreckten Lage verlagern.

Auf der ebenen Oberfläche 23 des Kalottenbauteils 22 wiederum liegt die ebene Unterseite 24 eines durch den Boden 25 eines in Fig. 3 im Einzelnen wiedergegebenen topfförmigen Zylinders 26 gebildeten scheibenförmigen Bauteils an, dessen zylindrische Wandung 27 gemäß Fig. 3 nach oben ragt. Die ebenen Flächen 23, 24 bilden Gleitflächen, entlang deren sich das Querhaupt 13 gegenüber den Wangen 2', 2'' in seiner Längsrichtung, d.h. in der gemäß Fig. 2 horizontalen Richtung, verlagern kann, wenn in dem Querhaupt 13 thermische Dehnungen auftreten, z.B. wenn auch die Walze 10 beheizt ist oder im Betrieb erhöhte Temperaturen annimmt.

Der topfförmige Zylinder 26 ist Teil einer Kolben/Zylindereinheit 40 (Fig. 3), die einen Doppelmantelkolben 28 umfaßt, dessen innere Kolbenwandung 29 mit ihrer Außenseite mit dem Innenumfang der zylindrischen Wandung 27 des Zylinders 26 dichtend zusammenwirkt und der außerdem noch eine die innere Wandung 29 koaxial mit radialem Abstand umgebende Wandung 31 umfaßt, die mit der Außenseite der Wandung 27 dichtend zusammenwirkt. Zwischen den Wandungen 29, 31 und oberhalb der oberen Stirnseite der Wandung 27 ist eine Leckölsammelkammer 32 gebildet, die an eine nicht dargestellte Absaugeinrichtung für Lecköl angeschlossen ist.

Die Teile 26,28 der Kolbenzylindereinheit 40 sind aneinander linear geführt, d.h. sie können sich zwar längs der Achse A verschieben, aber nicht gegeneinander neigen. Zur Aufnahme der Schrägstellung der Enden 14 des Querhauptes 13 bei Durchbiegungen desselben dienen die zusammenwirkenden Kugelflächen 19,21.

Eine zusätzliche Führung des Kolbens 28 an dem Zylinder 26 erfolgt durch einen von dessen Boden 25 aufragenden außen zylindrischen kolbenartigen Führungszapfen 35, der gleitend in eine entsprechende Bohrung 36 des Kolbens 28 eingreift. In dem inneren Hohlraum 37 des Führungszapfens 35 ist eine Schraube 38 angeordnet, die in einen zentralen vom flachen Boden des Schalenbauteils 18 hochstehenden Ansatz 65 eingreift und über eine Schraubendruckfeder 39, die sich über eine Druckscheibe 66 am Boden 25 des Zylinders 26 abstützt, die Teile 25, 22 und 18 mit einer der Schraubendruckkraft entsprechenden Kraft gegeneinanderzieht, um die Anfangsdichtigkeit sicherzustellen.

In der Kugelfläche 19 des Schalenbauteils 18 der Lagerung 30 ist eine als flache umlaufende Ringnut ausgebildete Leckölsammeltasche 41 vorgesehen, die durch umlaufende Dichtringe 41', 41'' radial nach außen bzw. innen abgedichtet ist.

An dem Kalottenbauteil 22 ist außer der gemäß Fig. 2 und 3 nach unten gerichteten konvexen Kugelfläche 21 auf der Oberseite die ebene Gleitfläche 23 vorgesehen, die mit der ebenen Gleitfläche 24 an der Unterseite des Bodens 25 zusammenwirkt. In der Gleitfläche 24 ist ebenfalls eine als flache zu der Achse A der Kolben/Zylindereinheit 40 konzentrische Ringnut ausgebildete Leckölsammeltasche 42 vorgesehen, die radial nach außen bzw. innen durch umlaufende Dichtringe 42', 42'' abgedichtet ist. Die Leckölsammeltaschen 41, 42 liegen in etwa gleichem radialen Abstand von der Achse A übereinander.

In die Leckölsammeltasche 41 führen über den Umfang verteilte Durchgangsbohrungen 44 des Kalottenbauteils 22, die anderenends im Querschnittsbereich der Leckölsammeltasche 42 ausmünden. Von dieser gehen zu der Achse A parallele Durchgangsbohrungen 43 der Wandung 27 des Zylinders 26 aus. Das in den Leckölsammeltaschen 41, 42 sich ansammelnde Lecköl wird über die Durchgangsbohrungen 43, 44 und die Leckölsammelkammer 32 fortlaufend abgeführt, so daß sich kein Druck aufbauen kann.

Die Kolben/Zylindereinheit 40 mit dem Kalottenbauteil 22 und dem Schalenbauteil 18 ist im Inneren eines ringförmigen Lagergliedes 50 angeordnet, welches in einer seinem Außenumfang 52 entsprechenden Ausnehmung 53 der jeweiligen Wange 2', 2'' des Walzenständers 2 angeordnet (Fig. 2) und durch sich gegen die Seitenflächen der Wange 2', 2'' legende radiale Bunde 51, 51 axial an der Wange 2', 2'' gehalten ist.

Der Kolben 28 der Kolbenzylindereinheit 40 ist mit dem ringförmigen Lagerglied 50 fest verbunden, während sich der Zylinder 26 in Richtung der Achse A verlagern kann und über Gleitstücke 45, die mit Gleitflächen 46 am Innenumfang des ringförmigen Lagergliedes 50 zusammenwirken senkrecht zu der Achse A an dem ringförmigen Lagerglied 50 geführt ist. Die Führung in Achsrichtung des Querhauptes erfolgt durch Gleitplatten 47, von denen eine auf der rechten Seite der Fig. 3 angedeutet ist. Der Stift 48 verhindert eine Drehung des ringförmigen Lagergliedes 50 in der Öffnung 53 der Wange 2', 2".

Die Walze 10 des Ausführungsbeispiels umfaßt eine über nicht wiedergegebene Lager auf dem Querhaupt 13 gelagerte Hohlwalze 11 und ist somit keine Walze mit innerem Hub. Sie bedarf also einer Einrichtung zur Verlagerung des Querhauptes 13 in der Wirkebene, die im vorliegenden Fall durch die Kolben/Zylindereinheit 40 gegeben ist. Am inneren Umfang des ringförmigen Lagergliedes 50 ist noch ein kleinerer Kolben 49 vorgesehen, der in eine Zylinderbohrung 54 auf der der Kolben/Zylindereinheit 40 gegenüberliegenden Seite des Endes 14 des Querhauptes 13 eingreift. Die dadurch gebildete Kolben/Zylindereinheit wird über eine Leitung 55 im Inneren des Querhauptes 13 mit Druckflüssigkeit versorgt und dient dazu, eine Abhebebewegung der Walze 10 von der beheizten Walze 20 zustandezubringen.

Die Kanäle 56, 57 in dem Ende 14 des Querhauptes 13 dienen zur Versorgung der im Inneren der Walze 10 angeordneten hydraulischen Stützeinrichtung, die eine oder mehrere gegen den Innenumfang der Hohlwalze 11 offene hydraulische Kammern, gegen den Innenumfang anliegende Stützschuhe oder eine Reihe längs der Walzen aufgereihter Stützstempel mit hydrostatischen Lagertaschen oder ähnliche Einrichtungen umfassen kann.

Wenn die Stützeinrichtung in Tätigkeit gesetzt wird, um die Hohlwalze 11 gemäß Fig. 1 nach unten gegen die Gegenwalze 20 zu drücken, würde das Querhaupt 13 ohne die Lagerungen 30 gemäß Fig. 2 nach oben verlagert. Die an den Enden 14 des Querhauptes 13 angreifenden Lagerungen 30 halten diese Enden 14 jedoch unten, wodurch die Biegung des Querhauptes 13 entsteht. Die nach unten gerichteten Kräfte wirken auf die abgesetzte Stützfläche 17. Sie werden erzeugt, indem auf das auf der Stützfläche 17 aufliegende Schalenbauteil 18 hydraulisch eine nach unten gerichtete Kraft ausgeübt wird.

Die hierzu erforderliche Hydraulikflüssigkeit wird bei 34' zugeführt und gelangt in die Kammer 34, wo sie auf die Oberseite 67 des Bodens 25 und den äußeren Absatz 70 des mit dem Boden 25 verbundenen Führungszapfens 35 die besagte Kraft ausübt. Diese Kraft ist erheblich und entspricht der Hälfte der in dem Walzspalt ausgeübten Gesamtkraft. Die Kraft wird über die Gleitflächen 23, 24 und die Kugelflächen 19, 21 auf die Stützfläche 17 abgleitet. Diese Flächenpaare stünden ohne besondere Maßnahmen unter einer erheblichen eine entsprechende, die Beweglichkeit einschränkende Reibung mit sich bringenden Belastung. Aus diesem Grund wurden die Flächenpaare 23, 24 und 19, 21 hydraulisch entlastet, so daß trotz der hohen Belastung eine Beweglichkeit erhalten bleibt.

Durch die Drosselbohrung 68 geringen Querschnitts tritt ein Teil der Hydraulikflüssigkeit in die die Schraube 38 und die Feder 39 enthaltende innere Kammer 37 des Führungszapfens 35 und von dort durch die Ausnehmungen 60, 61 auf die Unterseite 64 des Bodens 25 bzw. in die flache Vertiefung 33 über, die die Entlastungsdruckkammer 58 nach unten begrenzt. Die Unterseite 64 des Bodens 25 beläßt einen schmalen Spalt zur Oberseite 23 des Kalottenbauteils 22, so daß sich die Druckflüssigkeit bis zu der Ringdichtung 42'' ausbreiten und ihre Kraft auf einer entsprechenden Kreisfläche minus dem Querschnitt der Schraube 38 ausüben kann.

Die Hydraulikflüssigkeit gelangt ferner durch die zentrale Öffnung 62 des Kalottenbauteils 22 auf die Unterseite 63 desselben. Sie übt eine auf Abheben des Kalottenbauteils 22 von dem Schalenbauteil 18 gerichtete Kraft auf einer durch die Ringdichtung 41'' bestimmten Kreisfläche minus dem Querschnitt des zentralen Zapfens 65 aus. Die von der Hydraulikflüssigkeit beaufschlagten Flächen auf der Oberseite und der Unterseite 63 des Kalottenbauteils 22 sind ungefähr gleich groß, da die Ringdichtungen 41'' und 42'' etwa den gleichen Radius haben. Das Kalottenbauteil 22 ist also für sich genommen im wesentlichen hydraulisch entlastet.

Die Entlastungsdruckkammer 58 enthält das Kalottenbauteil 22 und ist axial durch die Unterseite des Bodens 25 der Kolben/Zylindereinheit 40 und den Boden der flachen Vertiefung 33 des Schalenbauteils 18, radial durch die Ringdichtungen 41'' und 42'' begrenzt. Der in ihr herrschende Druck dient der Fortleitung der Kraft der Kolben/Zylindereinheit 40 auf das Schalungsbauteil 18 bzw. die Stützfläche 17 des Querhauptes 13. Von der Kraft der Kolben/Zylindereinheit 40 braucht im Bereich der ebenen Gleitflächen 23, 24 bzw. der Kugelflächen 19, 21 allenfalls ein geringer Anteil zu wirken, um einen dem Druck in der Druckkammer 34 proportionalen Dichtkraftanteil bereitzustellen. Eine Grund-Dichtkraft wird schon durch die Feder 39 geliefert.

Wenn aus irgendeinem Grunde der Druck in der Entlastungsdruckkammer 58 zu einem Abheben des Gleitflächenpaares 23, 24 bzw. des Kugelflächenpaares 19, 21 führt, tritt an den Ringdichtungen 41'' Hydraulikflüssigkeit in die Leckölsammeltaschen 41 bzw. 42 über. Der Druck in der Entlastungsdruckkammer 58 fällt dann sofort ab, weil wegen der Drosselbohrung 68 nicht sofort wesentliche Mengen an Druckflüssigkeit aus der Druckkammer 34 nachgeliefert werden können. Dadurch schließt sich der an den Gleitflächen 23, 24 bzw. den Kugelflächen 19, 21 aufgetretene Spalt sogleich wieder, und es kann der Druck in der Entlastungsdruckkammer 58 wieder ansteigen. Im Ergebnis stellt sich ein Gleichgewicht ein, bei dem ständig eine geringe Menge an Hydraulikflüssigkeit nach außen abströmt und an den Gleitflächen 23, 24 und an den Kugelflächen 19, 21 einen tragfähigen Flüssigkeitsfilm bildet, so daß die benachbarten Teile 25, 22, 18 ohne direkte metallische Berührung aufeinanderliegen und die gegenseitige Verlagerung mit einem Minimum an Reibungskräften erfolgen kann.

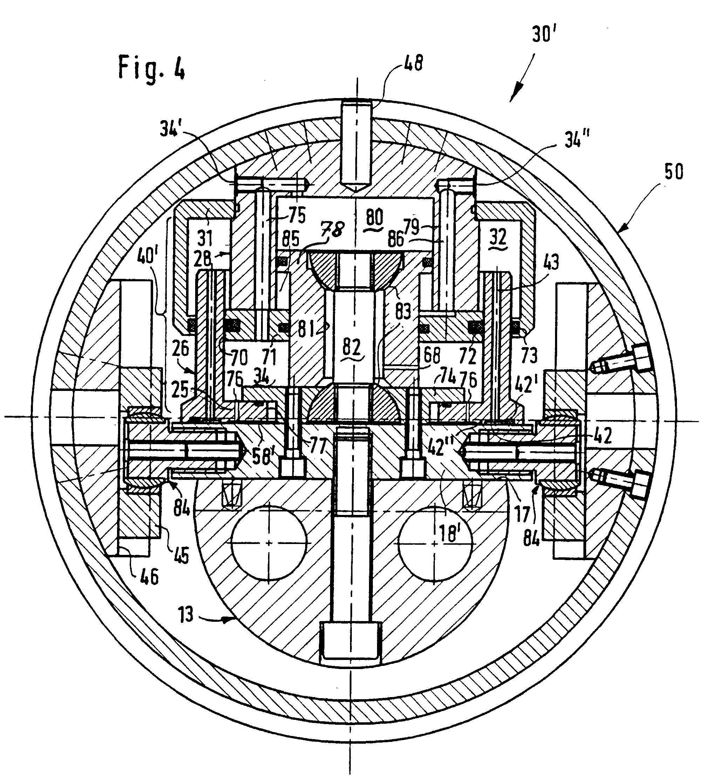

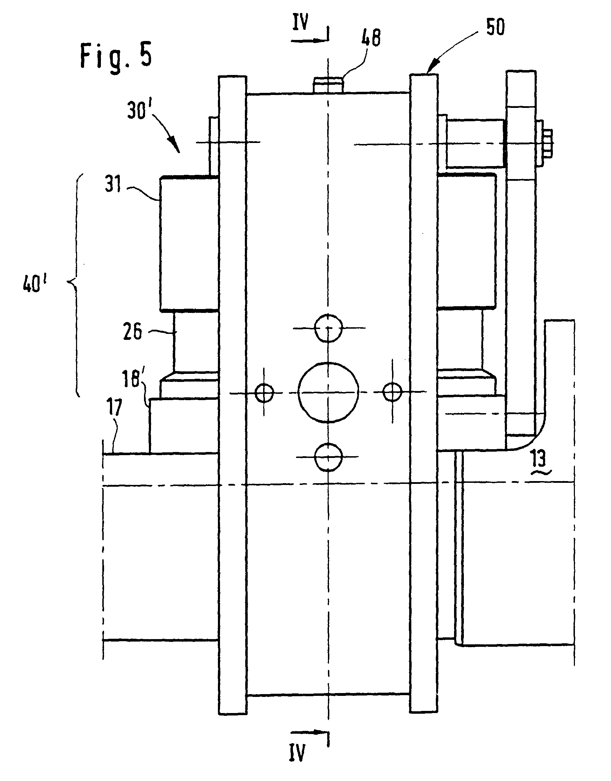

Bei der zweiten Ausführungsform 30' der Lagerung gemäß den Fig. 4 und 5 sind für einander funktionell entsprechende Teile gleiche Bezugszahlen verwendet, gegebenenfalls mit Strichen, um sie besser auseinanderhalten zu können. Insoweit gilt die Beschreibung der Fig. 1 bis 3 auch für die Fig. 4 und 5.

Der wesentliche Unterschied besteht darin, daß das Kalottenbauteil 22 fehlt, welches die Schrägstellung der Enden des Querhauptes 13 gegenüber dem ringförmigen Lagerglied 50 bei der Ausführungsform nach Fig. 3 erlaubt hat. Bei dieser Ausführungsform waren die beiden Teile 26,28 der Kolbenzylindereinheit 40 starr miteinander verbunden, d.h. sie konnten sich nur gegeneinander verschieben, aber nicht gegeneinander neigen.

Bei der Lagerung 30' nach den Fig. 4 und 5 ist die Neigbarkeit in die Kolbenzylindereinheit 40' hineingenommen, d.h. das zweite Teil 28 der Kolbenzylindereinheit 40' kann sich gegenüber dem den Zylinder darstellenden ersten Teil 26 um den erforderlichen geringen Winkelbetrag neigen, weil die Führung der beiden Teile 26,28 aneinander nicht streng geradlinig, sondern etwas taumelfähig ausgebildet ist. Der Außenumfang 70 des am Innenumfang des den Zylinder bildenden ersten Teils 26 der Kolbenzylindereinheit 40' gleitenden Kolbenbodens 71 ist in einer durch die Achse A gehenden Ebene etwas abgerundet, und es sind die Dichtungen 72,73 in der Lage, ihre Funktion auch noch bei den die in Betracht kommenden geringen Schrägstellungen der Teile 26,28 gegeneinander auszuüben.

Die Druckflüssigkeit tritt bei 34' ein und gelangt über den Kanal 75 in der Wandung des den Kolben 28 bildenden Teils der Kolbenzylindereinheit 40' in deren Druckkammer 34 und von dort durch Bohrungen 76 im Boden des den Zylinder bildenden Teils 26 der Kolbenzylindereinheit 40' in die unter diesem Boden gebildete Druckentlastungskammer 58', die kreisscheibenförmig ausgebildet ist und bis zu der durch einen ringförmigen Steg an der Unterseite des Bodens 25 des Teils 26 gebildeten Ringdichtung 42" reicht, die wie bei der Ausführungsform nach Fig. 3 konzentrisch außen von einer weiteren Ringdichtung 42' umgeben ist, wobei die beiden Dichtungen 42', 42" zwischen sich eine Leckölkammer 42 begrenzen, aus der das an der Stegdichtung 42" übergetretenen Lecköl über Durchgangsbohrungen 43 in eine Leckölkammer 32 gelangt, aus der es in nicht wiedergegebener Weise abgesaugt wird. Die ebene Unterseite des Teils 26 kann also dank der dort gebildeten Druckausgleichskammer 58' relativ leicht auf der ebenen Oberseite des dem Schalenbauteil 18 der Fig. 3 entsprechenden Plattenbauteils 18' zum Ausgleich von thermischen Längenänderungen des Querhauptes 13 verlagert werden.

Der Boden 25 des den Zylinder bildenden Teils 26 weist eine zentrale Öffnung 77 auf, durch die eine zu der Öffnung Spiel belassende Niederhalterscheibe 74 hindurchgreift, die mit ihrem Rand über den Rand der Öffnung 77 greift und das Teil 26 auf dem Plattenbauteil 18' niederhält und die Anfangsdichtigkeit der Druckentlastungskammer 58' erbringt. Auf der Oberseite der Niederhalterscheibe 74 sitzt ein Zusatzkolben 78, der den Kolbenboden 71 durchgreift und in einem Zylinder 79 gleitet, der in dem den Kolben bildenden zweiten Teil 28 der Kolbenzylindereinheit 40 ausgebildet ist. Die Kolbenfläche des Zusatzkolbens 78 kann auf diese Weise zur zusätzlichen Kraftausübung genutzt werden, denn es steht die Zylinderkammer 80 oberhalb des Zusatzkolbens 78 über eine Querbohrung 68 des Zusatzkolbens 78 mit der Druckkammer 34 in Verbindung. Die Druckflüssigkeit kann aus der Bohrung 81 des Zusatzkolbens 78 in die Zylinderkammer 80 gelangen. Die Bohrung 81 mit Spiel von einem Zuganker 82 durchgriffen, der über Kugelflächen einerseits an dem Zusatzkolben 78, andererseits an der Niederhalterscheibe 74 angreift und die Teile gegeneinander anzieht. Auf diese Weise gibtes an dem Zusatzkolben 78 bei Durchbiegungen des Querhauptes 13 keine Zwingungen. Die Kugelflächen 83 an den Enden des Zugankers 82 weisen kleine Kanäle auf, durch die die Druckflüssigkeit aus der Bohrung 81 in die Zylinderkammer 80 übertreten kann.

Ein weiterer Unterschied zu der Ausführungsform nach Fig. 3 besteht darin, daß die an den ebenen Gleitflächen 46 geführten Gleitstücke 45 mit dem Plattenbauteil 18 nicht durch Schrauben starr verbunden, sondern über Kugelköpfe 84 neigbar an dem Plattenbauteil 18' angebracht sind.

Statt des Kolbens 49 zum Abheben der Hohlwalze 11 der Walze 10 von der Gegenwalze 20 ist bei der Lagerung 30' "unter" dem Zusatzkolben 78 eine Zylinderkammer 85 gebildet, die über eine achsparallele Bohrung 86 in der Wandung des Teils 28 von einem Anschluß 34" her mit Druckflüssigkeit versorgt werden kann. Bei einer entsprechenden Druckbeaufschlagung der Zylinderkammer 85 werden das Querhaupt 13 gegenüber dem in der Wange 2' oder 2" sitzenden Lagerglied 50 und damit die Walze 10 von der Walze 20 hinweg hochgezogen.

## Patentansprüche

1. Walzvorrichtung (100) für die Druckbehandlung von Warenbahnen,
mit einer durchbiegungssteuerbaren Walze (10), die eine um ihre Achse umlaufende, den arbeitenden Walzenumfang bildende Hohlwalze (11), ein diese der Länge nach durchgreifendes, undrehbares, ringsum Abstand zum Innenumfang der Hohlwalze belassendes Querhaupt (13) und eine innere, an dem Querhaupt (13) angebrachte und gegen den Innenumfang der Hohlwalze (11) wirkende Stützeinrichtung umfaßt,
und mit die Enden (14) des Querhauptes (13) an äußeren Widerlagern (2',2",15) abstützenden äußeren Lagerungen (30,30') die zur Aufnahme der Durchbiegung des Querhauptes (13) zusammenwirkende Kugelflächen (19,21), von denen eine (19) mit dem Querhaupt (13), eine andere (21) mit dem jeweiligen Widerlager (2',15 bzw. 2'',15) verbunden ist, aufweisen, wobei die Teile der jeweiligen Lagerung (30,30') innerhalb eines ringförmigen, in einer zur Achse des Querhauptes (13) senkrechten Ebene angeordneten Lagergliedes (50) zu einer Baueinheit zusammengefaßt sind und das Lagerglied (50) in einer Öffnung des Widerlagers (2',15 bzw. 2'',15) angeordnet ist,
**dadurch gekennzeichnet,**
daß das Querhaupt (13) das ringförmige Lagerglied (50) mit seinem jeweiligen Ende (14) durchgreift und im Bereich des Lagergliedes (50) einen Absatz (16,17) aufweist, auf dem die Baueinheit der Teile der Lagerung (30,30') angeordnet ist,
daß zum Ausgleich von thermischen Längenänderungen des Querhauptes (13) eine hydrostatisch entlastete Anordnung ebener Gleitflächen (23,24) vorgesehen ist, von denen eine (23) mit dem Querhaupt (13), die andere (24) mit dem Widerlager verbunden ist,
und daß sowohl die Kugelflächen (19,21) als auch die ebenen Gleitflächen (23,24) zumindest teilweise hydraulisch entlastet sind.

2. Walzvorrichtung nach Anspruch 1, **dadurch gekennzeichnet,** daß eine eine Achse (A) aufweisende Kolbenzylindereinheit (40) vorgesehen ist, die die Stützkraft aufbringt und daß ein erstes Teil (28) der Kolbenzylindereinheit (40) mit dem jeweiligen Widerlager ((2',15) bzw. (2",15)) fest verbunden und das andere Teil (26) der Kolbenzylindereinheit (40) an dem ersten Teil (28) linear geführt und gegenüber dem Querhaupt (13) in dessen Biegeebene neigbar ist.

3. Walzvorrichtung nach Anspruch 1, **dadurch gekennzeichnet,** daß eine eine Achse (A) aufweisende Kolbenzylindereinheit (40') vorgesehen ist, die die Stützkraft aufbringt, und daß ein erstes Teil (26) der Kolbenzylindereinheit (40') starr mit dem jeweiligen Widerlager ((2', 15) bzw. (2",15)) verbunden ist, während das andere Teil (28) starr mit dem Querhaupt (13) verbunden in der Biegeebene des Querhauptes (13) gegenüber dem ersten Teil (26) neigbar ist.

4. Walzvorrichtung nach Anspruch 2, **dadurch gekennzeichnet,** daß die Kugelflächen (19,21) und die ebenen Gleitflächen (23,24) ringförmig und zur Achse (A) gleichachsig ausgebildet sind.

5. Walzvorrichtung nach Anspruch 2 oder 4, **dadurch gekennzeichnet,** daß die Kolben/Zylindereinheit (40) gegen ein scheibenförmiges Bauteil (25) wirkt, an dessen Unterseite die eine ebene Gleitfläche (24) ausgebildet ist, daß die andere ebene Gleitfläche (23) an der Oberseite eines scheibenförmigen Kalottenbauteils (22) ausgebildet ist, welches an der Unterseite eine konvexe Kugelfläche (21) trägt, und daß die andere konkave Kugelfläche (19) an einem zuunterst angeordneten scheibenförmigen Schalenbauteil (18) ausgebildet ist.

6. Walzvorrichtung nach Anspruch 5, **dadurch gekennzeichnet,** daß das die eine ebene Gleitfläche (24) aufweisende Bauteil (25) der Boden des topfförmig ausgebildeten Zylinders (26) der Kolben/Zylindereinheit (40) ist,
daß der Kolben (26) der Kolben/Zylindereinheit (40) als Doppelmantelkolben ausgebildet ist, der die Wandung (27) des Zylinders (26) zwischen seinen Wänden (29, 31) aufnimmt, und daß der Druckraum (34) innerhalb der Wandung (29) des Kolbens und oberhalb der Oberseite (67) des Bodens (25) über einen Anschluß (34') mit Druckflüssigkeit füllbar ist.

7. Walzvorrichtung nach Anspruch 6, **dadurch gekennzeichnet,** daß unter dem Boden (25) in dem Schalenbauteil (18) eine das Kalottenbauteil (22) zumindest teilweise enthaltende Druckentlastungskammer (58) gebildet ist, die durch eine Ringdichtung (42'') an den ebenen Gleitflächen (23,24) und eine Ringdichtung (41'') an den Kugelflächen (19,21) radial nach außen begrenzt ist und in der die Hydraulikflüssigkeit Zugang zu beiden, innerhalb der Ringdichtungen (41'',42'') gelegenen Flachseitenbereichen des Kalottenbauteils (22) hat.

8. Walzvorrichtung nach Anspruch 7, **dadurch gekennzeichnet,** daß die Ringdichtungen (41'',42'') etwa gleichen Durchmesser aufweisen.

9. Walzvorrichtung nach Anspruch 7 oder 8, dadurch gekennzeichnet, daß radial außerhalb der Ringdichtungen (41'',42'') Leckölsammeltaschen (41,42) gebildet sind.

10. Walzvorrichtung nach Anspruch 9, **dadurch gekennzeichnet,** daß die Leckölsammeltasche (42) der Gleitflächen (23,24) an dem Zylinderboden (25) und die Leckölsammeltasche (41) der Kugelflächen (19,21) an dem Schalenbauteil (18) vorgesehen sind.

11. Walzvorrichtung nach Anspruch 9 oder 10, **dadurch gekennzeichnet,** daß die Leckölsammeltaschen (41, 42) auf einer Seite durch die Ringdichtungen (41'',42''), auf der anderen Seite durch in radialem Abstand konzentrisch dazu verlaufende Ringdichtungen (41'42') und im übrigen durch die Gleitflächen (23,24) bzw. gegebenenfalls die Kugelflächen (19,21) begrenzt sind.

12. Walzvorrichtung nach einem der Ansprüche 9 bis 11, **dadurch gekennzeichnet,** daß die Flüssigkeitsableitung aus den Leckölsammeltaschen (41,42) durch mindestens eine in Wirkrichtung der Kolben/Zylindereinheit (40) durch die Wandung (27) des Zylinders (26) geführte Durchgangsbohrung (43) gebildet ist.

13. Walzvorrichtung nach einem der Ansprüche 7 bis 12, **dadurch gekennzeichnet,** daß die die Druckentlastungskammer (58) begrenzenden, über die Flächen (19,21;23,24) aneinander anliegenden Teile (25,22,18) unter Federkraft aneinander anliegen.

14. Walzvorrichtung nach Anspruch 3, dadurch **gekennzeichnet,** daß die Teile (26,28) der Kolbenzylindereinheit (40') um einen der Schrägstellung der Enden (14) des Querhauptes (13) bei dessen Durchbiegung entsprechenden geringen Winkel unter Aufrechterhaltung der Abdichtung des Druckraums (34) d r Kolbenzylindereinheit (40') gegeneinander neigbar sind.

15. Walzvorrichtung nach Anspruch 14, **dadurch gekennzeichnet,** daß unter dem Boden (25) des ersten Teils (26) der Kolbenzylindereinheit (40') eine Druckentlastungskammer (58') gebildet ist, die durch eine Ringdichtung (42") radial nach außen begrenzt ist.

16. Walzvorrichtung nach einem der Ansprüche 7 bis 15, **dadurch gekennzeichnet,** daß der Druckraum (34) der Kolbenzylindereinheit (40,40') mit der Druckentlastungskammer (58,58') über mindestens eine Drosselbohrung (68, 76) in Flüssigkeitsverbindung steht.

## Claims

1. A roller system (100) for the pressure treatment of webs of material,
with a controlled deflection roller (10) comprising a shell (11) rotating about its axis and forming the working roller periphery, a non-rotatable beam (13) extending through the length of the shell (11) and leaving a space all round from the inner periphery of the shell, and an inner support device disposed on the beam (13) and acting against the inner periphery of the shell (11),
and with outer mountings (30, 30') which support the ends (14) of the beam (13) on outer abutments (2', 2", 15) and which have spherical surfaces (19, 21) which cooperate to take the deflection of the beam (13) and of which one (19) is connected to the beam (13) and another (21) is connected to the respective abutment (2', 15; 2", 15 respectively), the parts of the respective mounting (30, 30') being combined into a structural unit within an annular bearing member (50) disposed in a plane perpendicular to the axis of the beam (13) and the bearing member is disposed in an opening in the abutment (2', 15; 2", 15 respectively),
characterised in that the beam (13) extends by its respective end (14) through the annular bearing member (50) and has in the region of the mounting member (50) a shoulder (16, 17) on which the structural unit comprising the parts of the mounting (30, 30') is disposed,
in that to equalise thermal changes in the length of the beam (13) there is provided a hydrostatically relieved arrangement of planar sliding surfaces (23, 24), of which one (23) is connected to the beam (13) and the other (24) is connected to the abutment,
and in that both the spherical surfaces (19, 21) and also the planar sliding surfaces (23, 24) are at least partially hydraulically relieved.

2. A roller system according to claim 1, characterised in that a piston and cylinder unit (40) is provided which has an axis (A) and which applies the support force and in that a first part (28) of the piston and cylinder unit (40) is rigidly connected to the respective abutment ((2', 15); (2", 15) respectively) and the other part (26) of the piston and cylinder unit (40) is guided lineally on the first part (28) and is adapted to incline relatively to the beam (13) in the plane of deflection thereof.

3. A roller system according to claim 1, characterised in that a piston and cylinder unit (40') is provided which has an axis (A) and which applies the support force and in that a first part (26) of the piston and cylinder unit (40') is rigidly connected to the respective abutment (2', 15); (2", 15) respectively) while the other part (28) rigidly connected to the beam (13) is adapted to incline relatively to the first part (26) in the plane of deflection of the beam (13).

4. A roller system according to claim 2, characterised in that the spherical surfaces (19, 21) and the planar sliding surfaces (23, 24) are annular and coaxial with the axis (A).

5. A roller system according to claim 2 or 4, characterised in that the piston and cylinder unit (40) acts against a disc-shaped component (25) on the underside of which a planar sliding surface (24) is formed, in that the other planar sliding surface (23) is formed on the upper surface of a disc-shaped part-spherical component (22) which bears a convex spherical surface (21) on the underside, and in that the other concave spherical surface (19) is formed on a disc-shaped shell component (18) disposed at the very bottom.

6. A roller system according to claim 5, characterised in that the component (25) having the one planar surface (24) is the base of the pot-shaped cylinder (26) of the piston and cylinder unit (40),
in that the piston (26) of the the piston and cylinder unit (40) is constructed as a double-wall piston which accommodates the wall (27) of the cylinder (26) between its walls (29, 31) and in that the pressure chamber (34) inside the wall (29) of the piston and above the upper surface (67) of the base (25) is adapted to be filled with pressure fluid via a connection (34').

7. A roller system according to claim 6, characterised in that a pressure relief chamber (58) at least partially containing the part-spherical component (22) is formed under the base (25) in the shell component (18) and is defined radially outwards by an annular seal (42") at the planar sliding surfaces (23, 24) and an annular seal (41") at the spherical surfaces (19, 21) and in which the hydraulic fluid has access to both the flat side zones of the part-spherical component (22) located inside the annular seals (41", 42").

8. A roller system according to claim 7, characterised in that the annular seals (41", 42") have substantially the same diameter.

9. A roller system according to claim 7 or 8, characterised in that leakage oil collecting pockets (41, 42) are formed radially outside the annular seals (41", 42").

10. A roller system according to claim 9, characterised in that the leakage oil collecting pocket (42) of the sliding surfaces (23, 24) is provided on the cylinder base (25) and the leakage oil collecting pocket (41) of the spherical surfaces (19, 21) is provided on the shell component (18).

11. A roller system according to claim 9 or 10, characterised in that the leakage oil collecting pockets (41, 42) are defined on one side by the annular seals (41", 42") and on the other side by annular seals (41', 42') extending concentrically thereto in radially spaced relationship and otherwise by the sliding surfaces (23, 24) and/or where applicable the spherical surfaces (19, 21).

12. A roller system according to any one of claims 9 to 11, characterised in that the fluid discharge means from the leakage oil collecting pockets (41, 42) is formed by at least one through bore (43) extending through the wall (27) of the cylinder (26) in the direction of action of the piston and cylinder unit (40) .

13. A roller system according to any one of claims 7 to 12, characterised in that the parts (25, 22, 18) which define the pressure relief chamber (58) and which abut one another by way of the surfaces (19, 21; 23, 24) abut one another under spring force.

14. A roller system according to claim 3, characterised in that the parts (26, 28) of the piston and cylinder unit (40') are adapted to incline relatively to one another through a small angle corresponding to the inclination of the ends (14) of the beam (13) occurring in the event of its deflection while sealing of the pressure chamber (34) of the piston and cylinder unit (40') is maintained.

15. A roller system according to claim 14,
characterised in that a pressure relief chamber (58') which is radially outwardly defined by an annular seal (42") is formed under the base (25) of the first part (26) of the piston and cylinder unit (40').

16. A roller system according to any one of claims 7 to 15, characterised in that the pressure chamber (34) of the piston and cylinder unit (40, 40') is in fluid communication with the pressure relief chamber (58, 58') by way of at least one throttle bore (68, 76) .

## Revendications

1. Dispositif à cylindres (100) pour le traitement par compression d'articles en bandes, dans lequel :
- un cylindre (10) à flexion contrôlée comprend, tournant autour de son axe, un cylindre creux (11) dont la périphérie constitue la surface de travail et qui est traversé, dans sa longueur, par une entretoise transversale (13) laissant un certain espace entre elle et la paroi interne du cylindre creux (11), sur laquelle agit un dispositif de soutien interne porté par l'entretoise (13) ,
- les extrémités (14) de l'entretoise (13) sont en appui sur des contre-paliers extérieurs (2', 2", 15) par des paliers externes (30, 30') équipés, pour supporter la flexion de l'entretoise transversale (13) de portées sphériques (19, 21) dont l'une (19) est reliée à l'entretoise (13) tandis que l'autre (21) est reliée au contre-palier correspondant (2', 15 ou 2", 15), les parties de chaque palier (30, 30') étant réunies en un ensemble à l'intérieur d'un organe de palier (50) annulaire disposé dans un plan perpendiculaire à l'axe de l'entretoise (13), et l'organe de palier (50) étant logé dans une ouverture du contre-palier (2', 15 ou 2", 15),
caractérisé en ce que
- l'entretoise transversale (13), par chacune de ses extrémités correspondantes (14), traverse l'organe annulaire de palier (50) correspondant et présente, dans la zone de cet organe de palier (50), un appendice (16, 17) sur lequel est monté l'ensemble des parties du palier (30, 30'),
- pour compenser les variations d'origine thermique, de la longueur de l'entretoise transversale (13), il est prévu un système à décharge hydrostatique, de portées planes de glissement (23, 24) dont l'une (23) est reliée à l'entretoise (13) tandis que l'autre (24) est reliée au contre-palier, et
- les portées sphériques (19, 21) ainsi que les portées planes de glissement (23, 24) sont déchargées hydrauliquement, au moins en partie.

2. Dispositif à cylindres selon la revendication 1,
caractérisé en ce qu'
- un vérin (40) présentant un axe (A) fournit la force de soutien, et
- une première partie (28) du vérin (40) est solidaire de chaque contre-palier (2', 15 ou 2", 15), tandis que l'autre partie (26) du vérin (40) peut se déplacer linéairement par rapport à la première partie (28) et s'incliner par rapport à l'entretoise (13) dans le plan de flexion de celle-ci.

3. Dispositif à cylindres selon la revendication 1,
caractérisé en ce qu'
- un vérin (40') présentant un axe (A) fournit la force de soutien, et
- une première partie (26) du vérin (40) est liée rigidement au contre-palier (2', 15 ou 2", 15), tandis que l'autre partie (28) du vérin (40), reliée rigidement à l'entretoise transversale (13), a tendance à s'incliner par rapport à la première partie (26) dans le plan de flexion de l'entretoise (13).

4. Dispositif à cylindres selon la revendication 2,
caractérisé en ce que
les portées sphériques (19, 21) et les portées planes de glissement (23, 24) sont de forme annulaire et ont le même axe (A) .

5. Dispositif à cylindres selon la revendication 2 ou 4,
caractérisé en ce que
le vérin (40) agit en direction d'un composant (25) en forme de disque sur la face inférieure duquel se trouve une portée plane de glissement (24), tandis que l'autre portée plane de glissement (23) se trouve sur la face supérieure d'une calotte (22) en forme de disque présentant sur sa face inférieure une portée sphérique (21) convexe, l'autre portée sphérique (19) concave se trouvant sur une coquille (18) en forme de disque située tout en bas.

6. Dispositif à cylindres selon la revendication 5,
caractérisé en ce que
le composant (25) présentant une portée plane de glissement (24) est le fond du cylindre (26) en forme de pot appartenant au vérin (40), tandis que le piston (26) de ce vérin (40) est un piston à double paroi avec, logée entre ses parois (29, 31), la paroi (27) du cylindre (26), la chambre de pression (34) située à l'intérieur de la paroi (29) du piston et au-dessus de la face supérieure (67) du fond (25) pouvant être remplie par un liquide sous pression par l'intermédiaire d'un raccord (34').

7. Dispositif à cylindres selon la revendication 6,
caractérisé en ce que
sous le fond (25) se trouve dans la coquille (18) une chambre de décharge de pression (58) contenant au moins partiellement la calotte (22) et qui est délimitée radialement vers l'extérieur par un joint annulaire d'étanchéité (42") le long des portées planes de glissement (23, 24) et par un joint annulaire d'étanchéité (41") le long des portées sphériques (19, 21), le liquide hydraulique ayant accès, dans cette chambre aux deux zones latérales plates de la calotte (22), situées à l'intérieur des joints annulaires d'étanchéité (41", 42") .

8. Dispositif à cylindres selon la revendication 7,
caractérisé en ce que
les joints annulaires d'étanchéité (41", 42") ont à peu près les mêmes diamètres.

9. Dispositif à cylindres selon la revendication 7 ou 8,
caractérisé en ce que
radialement à l'extérieur des joints annulaires d'étanchéité (41", 42") se trouvent des poches collectrices de l'huile de fuite (41, 42).

10. Dispositif à cylindres selon la revendication 9,
caractérisé en ce que
la poche collectrice (42) de l'huile de fuite issue des portées de glissement (23, 24) est prévue sur le fond du cylindre (25) tandis que la poche collectrice (41) de l'huile de fuite issue des portées sphériques (19, 21) est prévue sur la coquille (18).

11. Dispositif à cylindres 9 ou 10,
caractérisé en ce que
les poches collectrices de l'huile de fuite (41, 42) sont délimitées d'un côté par des joints annulaires d'étanchéité (41", 42") et de l'autre côté par des joints annulaires d'étanchéité (41', 42') concentriques aux premiers et à une certaine distance de ceux-ci et, pour le reste, par les portées de glissement (23, 24) et éventuellement les portées sphériques (19, 21).

12. Dispositif à cylindres selon l'une quelconque des revendications 9 à 11,
caractérisé en ce que
l'évacuation du liquide collecté dans les poches (41, 42) est assurée par au moins un perçage (43)traversant la paroi (27) du cylindre (26), dans la direction d'action du vérin (40) .

13. Dispositif à cylindres selon l'une quelconque des revendications 7 à 12,
caractérisé en ce que
les parties (25, 22, 18) délimitant la chambre de décharge de pression (58) et situées côte à côte au-dessus des portées (19, 21 ; 23, 24) sont appliquées l'une sur l'autre par une force élastique.

14. Dispositif à cylindres selon la revendication 3,
caractérisé en ce que
les parties (26, 28) du vérin (40') ont tendance à s'incliner l'une vers l'autre d'un angle faible correspondant à la position inclinée des extrémités (14) de la traverse transversale (13) quand celle-ci fléchit, tout en maintenant l'étanchéité dans la chambre de pression (34) du vérin (40').

15. Dispositif à cylindres selon la revendication 14,
caractérisé en ce que
sous le fond (25) de la première partie (26) du vérin (40') se trouve une chambre de décharge de pression (58') délimitée radialement vers l'extérieur par un joint annulaire d'étanchéité (42") .

16. Dispositif à cylindres selon l'une quelconque des revendications 7 à 15,
caractérisé en ce que
la chambre de pression (34) du vérin (40, 40') est en liaison hydraulique avec la chambre de décharge de pression (58, 58') par au moins un perçage d'étranglement (68, 76) .
